# EUROPEAN PATENT APPLICATION

(11) **EP 4 438 887 A1**
(43) Date of publication of application: **02.10.2024**
(21) Application number: 23164328.9
(22) Date of filing: 27.03.2023
(51) Int. Cl.: F03D 1/06

(54) **LAMINATE STRUCTURE FOR A FLANGE CONNECTION OF A WIND TURBINE ROTOR BLADE, CONNECTING ELEMENT, WIND TURBINE ROTOR BLADE AND METHOD FOR MANUFACTURING A LAMINATE STRUCTURE**

(71) Applicant: Nordex Blade Technology Centre ApS, 5771 Stenstrup (DK)
(72) Inventor: Soerensen, Flemming, 5771 Stenstrup (DK)
(74) Representative: Epping - Hermann - Fischer

(57) **Abstract**

A laminate structure (146) for a flange connection of a wind turbine rotor blade (110) with at least one connecting element (144) comprising a bushing (148) and a core element (150), wherein
- a first end (152) of the bushing (148) has a bore hole (156) with an inner thread (158) being adapted for accommodating a connection bolt,
- a second end (154) of the bushing (148) has a bushing runout (160) with an inner recess (162), the inner recess (162) being of a funnel-like shape,
- the core element (150) comprises an inner portion (166), a middle portion (168) and an outer portion (170), wherein
-- the outer portion (170) tapers at an end (174) opposite to the inner portion (166),
-- the inner portion (166) has a shape corresponding to the inner recess (162),

- a first laminate layer (176) is wrapped around the inner portion (166) and the middle portion (168) of the core element (150), and
- the wrapped core element (150) is inserted into the inner recess (162) with the inner portion (166) such that the first laminate layer (176) is arranged between the core element (150) and the bushing runout (160).

## Description

The invention relates to a laminate structure for a flange connection of a wind turbine rotor blade, to a connecting element, to a wind turbine rotor blade and a method for manufacturing a laminate structure.

Wind turbines having rotor blades are widely known from the prior art and are used to convert wind energy into electrical energy. In the region of a rotor blade root, the rotor blades typically comprise a rotor blade attachment region with a plurality of connecting elements integrated into the laminate. The connecting elements are bushings or comprise bushings through which the rotor blades are connected via fastening (screw) bolts to a bearing ring of a so-called pitch bearing or to a component connected to the bearing ring such as e.g. an extender of the wind turbine. The connecting elements can be part of a flange insert for the rotor blade attachment. Such a structure is known, for example, from the international application WO 2015/124568 A1.

Alternatively, such connecting elements are also used during the connection of rotor blade segments which, when arranged and assembled lengthwise, form a rotor blade. The bushings are then located in the laminate of a respective division flange of the rotor blade segments. The rotor blade segments are connected to one another via the connecting elements by means of bolts or by way of suitable intermediate pieces.

One object which underlies the invention is to provide a concept for a connecting element which contributes to a very reliable embedding of the connecting element into a surrounding laminate of a wind turbine rotor blade, wherein in particular a force transmission between a bushing of the connecting element and the surrounding laminate is optimized.

According to first aspect, a laminate structure for a flange connection of a wind turbine rotor blade is disclosed. The laminate structure comprises at least one connecting element comprising a bushing and a core element. A first end of the bushing has a bore hole with an inner thread being adapted for accommodating a connection bolt. A second end of the bushing has a bushing runout with an inner recess, the inner recess being of a funnel-like shape. The core element comprises an inner portion, a middle portion and an outer portion. The outer portion tapers at an end opposite to the inner portion and is, for example, adapted to be included into a lamination of the wind turbine rotor blade outside of the bushing. The inner portion has a shape corresponding to the inner recess, which means that, for example, the inner portion tapers towards its inner end (the end which is inserted into the bushing runout).

A first laminate layer is wrapped around the inner portion and the middle portion of the core element. The wrapped core element is inserted into the inner recess with the inner portion such that the first laminate layer is arranged between the core element and the bushing runout.

The described laminate structure comprising the connecting element is a half-product, which is configured to be embedded in an intermediate laminate half-product, e.g. a prefabricated flange insert, which is then used in a final laminate, e.g. the shell of the wind turbine rotor blade. Alternatively, the described laminate structure is directly used for manufacturing the final laminate, e.g. the rotor blade shell. The described laminate structure, in particular the first laminate layer, is further configured to be impregnated by resin during the manufacturing process of a wind turbine rotor blade. Typically, a bunch of connecting elements is used for the intermediate laminate half-product and/or the final laminate.

The inventor found out that the above-described laminate structure has structural advantages with regard to embedding the connecting element into the surrounding laminate of the wind turbine rotor blade, e.g. the shell or the flange. According to the invention the first laminate layer is arranged around the core element such that this first laminate layer is between the outer surface of the core element and the inner wall of the bushing runout, wherein the first laminate layer also covers (at least partially) the middle portion. Thus, one portion of the first laminate layer is within the bushing and the other portion is outside of the bushing, there being in contact with further laminate layers. In other words, the inventive design of the connecting element provides an inner core laminate, wherein the first laminate layer lines the wall of the inner recess of the bushing runout, at least partially.

In a later production step, e.g. if the connecting element is placed into a mold for production of the wind turbine rotor blade or the intermediate laminate structure as above, a resin infusion takes place. In such a process, resin impregnates the first laminate layer and impregnates it prior to curing. Particularly, since the first laminate also covers the middle portion of the core element, the resin can spread well inside the bushing runout, i.e. within the inner recess, and bonds the core element to the bushing from the inside.

The invention contributes to a very good load transfer between the bushing and a surrounding fiber composite material bonded thereto, such as the final laminate, in a final cured state of the involved laminate and in an operation state of the rotor blade. Stress peaks or stiffness leaps between the bushing and laminate at the bushing runout, in particular at interfaces or in bonding regions, are avoided or reduced. It helps to minimize local overloads in the connecting element, such as at the runout at the second end of the bushing. Thus, higher stresses can be compensated in the bushing, especially in the thin-walled areas at the bushing runout. Consequently, cracks or breaks in the bushing and overloading of the bonding between laminate and bushing is avoided. Overall, the invention enables a design of the connecting element that is suitable for bonding and embedding into further laminates.

The core element is made of a filler material, e.g. a foam material or a cured fiber reinforced material. For example, the core element is inserted into the bushing runout at least until it abuts against a wall of bushing (runout), or a bolt stopper element, which is inserted into the inner recess prior to the core element. For example, such a bolt stopper element ensures that no resin enters the threaded area of the bushing and that the connection bolt does not penetrate the core element during mounting of the bolt. Preferably, the core element is inserted into the inner recess as much as possible, in order to have a maximum contact area between the first laminate layer and the bushing wall of the inner recess. Furthermore, cavities filled with air, e.g. air pockets, which would be filled with pure resin during vacuum infusion, are avoided or at least reduced.

The bushing runout is the portion of the bushing leading to the second bushing end. "Funnel-like shape" means that the wall thickness of the bushing runout tapers towards the second end, while an inner diameter of the inner recess increases towards the second bushing end. The bushing has, for example, a cylindrical configuration. For example, the following forms are conceivable for the bushing runout: A conical form, a champagne glass form, hyperbolas, polynomials, exponential functions and combinations as well as free forms, and splines.

The first laminate layer is at least wrapped around both the inner portion and the middle portion of the core element. Preferably, the entire sheath surface of the inner portion is covered with the first laminate layer. The sheath surface of the middle portion can be covered completely or partly.

The middle portion and outer portion of the core element are arranged outside of the bushing.

The first laminate layer (and this applies for all further laminate layers to be described in this text) comprises one or more layers of fibers, e.g. one or more fiber mats.

The outer portion of the core element tapers towards the outer end of the core element. For example, the outer portion is shafted. This contributes to an ideal embedding of the connecting element in the surrounding laminate of the wind turbine rotor blade.

According to an embodiment, the outer portion is free of the first laminate layer. This contributes to a very good embedding of the connecting element in the surrounding laminate of the wind turbine rotor blade.

According to an embodiment, a second laminate layer is wrapped around both the bushing and the core element. Preferably, the second laminate layer covers the bushing (partially or entirely) and the middle portion (partially or entirely) of the core element, wherein the outer portion remains free of both the first and the second laminate layer. Optionally, the outer portion can also be covered, at least partially, by the second laminate layer. This further contributes to the above-mentioned functions and advantages.

According to an embodiment the first laminate layer and/or the second laminate layer are made from a dry fiber material comprising uni-directional fibers aligned in the load direction and infused with resin. This particularly means that the laminate structure is in a final mounting state, e.g. it is comprised in an intermediate half-product like a prefabricated flange insert, or it is comprised in the final produced wind turbine rotor blade.

According to the invention, the first laminate layer is wrapped around the core element. Dry fiber material (also: dry material) can very effectively adapt to the shape of the inner portion of the core element, which has a decreasing diameter in the direction to the inner end, i.e. it tapers. By using dry material it is possible to cover the whole surface of the inner portion of the core element to receive a reliable and strong connection to the bushing after having impregnated the first laminate layer with resin and cured it. The fibers of the first laminate layer are preferably aligned in direction of load acting during operation. In other words, the first laminate layer preferably comprises unidirectional fibers oriented in the longitudinal direction (e.g. middle axis) of the bushing or the core element or the rotor blade respectively. For example, the first laminate layer comprises a dry laminate ply, having an adapted shape, which, wrapped around the core element, leads to an offset of the edges of the ply in the turns with respect to the longitudinal axis. Alternatively, the first laminate layer can comprise more than one dry laminate ply, preferably two or three or more plies. The dry laminate plies are arranged one on top of each other with an offset of the edges to each other. The offset is at least 20 mm per ply.

According to an embodiment, the inner portion of the core element comprises a resin channel, the resin channel extending from an outer surface of the core element towards an end of the inner portion facing the first end of the bushing. The end of the inner portion is, for example, a tip of the core element being inserted into the bushing. By means of the resin channel, the resin flow to the inner region of the inner recess can be improved in order to impregnate the entire first laminate layer within the inner recess.

According to an embodiment, the resin channel is formed in a cross-like manner within the core element, in particular by crosswise arranged slits. This makes the inner portion of the core element more flexible, so that it can be inserted into the bushing in the right depth. Additionally, this provides an even better distribution of the resin, as the channel allows a larger distribution area for the resin out of the core element, in particular in the region of the tip, so that the resin can impregnate the first laminate layer.

According to an embodiment a spacer element is at least partially arranged in the resin channel. The spacer element can be a flexible element, e.g. an elastomer or a compressible foam material, which is clamped or pressed into the resin channel. Due to the flexibility of the material, on the one hand the spacer element can be compressed by the core element during the insertion into the bushing runout and on the other hand it can provide a pressure against the core element leading to an improved fitting of the core element and the wrapped first laminate layer in the bushing runout. Additionally, spacer element keeps the resin channel open during resin impregnation to ensure distribution of the infused resin. In other words, the spacer element spreads the resin channel open or keeps it open for resin infusion.

According to an embodiment the bushing runout is at least partially roughened within the inner recess. This allows for a good adhesion of the resin to the walls defining the inner recess.

According to an embodiment, the inner portion of the core element is inserted about 10 cm or more into the inner recess. For example, the inner portion covers at least 20% of an entire length of the core element.

According to a second aspect, a connecting element for a flange connection of a wind turbine rotor blade is disclosed. The connecting element comprises a bushing and a core element. A first end of the bushing has a bore hole with an inner thread being adapted for accommodating a connection bolt. A second end of the bushing has a bushing runout with an inner recess, the inner recess being of a funnel-like shape. The core element comprises an inner portion, a middle portion and an outer portion. The outer portion tapers at an end opposite to the inner portion. The inner portion has a shape corresponding to the inner recess. A first laminate layer is wrapped around the inner portion and the middle portion of the core element. The wrapped core element is inserted into the inner recess with the inner portion such that the first laminate layer is arranged between the core element and the bushing runout.

The connecting element enables the above-mentioned functions and advantages. The above-described embodiments analogously apply.

According to a third aspect, a wind turbine rotor blade is disclosed, the wind turbine rotor blade comprising a flange connection having a laminate structure according to any one of the above embodiments. The laminate structure can be arranged at the rotor blade root for providing a flange connection to a hub or an extender. Additionally or alternatively, the laminate structure may be disposed in a segmentation region of a rotor blade segment to provide a flange connection suitable for connecting the rotor blade segment to another rotor blade segment.

The wind turbine rotor blade enables the above-mentioned functions and advantages. The above-described embodiments analogously apply.

The wind turbine rotor blade typically comprises several connecting elements as described above, wherein the several connecting elements are arranged in the circumferential direction.

According to a fourth aspect, a method for manufacturing a laminate structure for a flange connection of a wind turbine rotor blade is disclosed. The method comprises the steps of:
- providing a bushing, the bushing comprising - at a first bushing end - a bore hole with an inner thread adapted for accommodating a connection bolt, and - at a second bushing end - a bushing runout with an inner recess, the inner recess being of a funnel-like shape,
- providing a core element, which comprises an inner portion, a middle portion and an outer portion, wherein
   -- the inner portion has a shape corresponding to the shape of the inner recess, and
   -- the outer portion tapers at an end opposite to the inner portion and is, for example, adapted to be included into a lamination of the wind turbine rotor blade outside of the bushing,
- wrapping a first laminate layer around the inner portion and the middle portion of the core element,
- inserting the core element into the inner recess with the inner portion such that the first laminate layer is arranged between the core element and the bushing runout, and
- infusing the first laminate layer with resin and curing the resin.

The method enables the above-mentioned functions and advantages. The above-described embodiments analogously apply.

According to an embodiment the method comprises the additional step of:
- wrapping a second laminate layer around both the bushing and the core element wherein, in the step of infusing, both the first and second laminate layers are infused with the resin and cured afterwards.

According to an embodiment the method comprises the additional step of embedding the connecting element between one or more further laminate layers. Such further laminate layers form the laminate of a prefabricated flange insert or the wind turbine rotor blade, e.g. the shell.

According to an embodiment - prior to the step of wrapping the first laminate layer - adhesive e.g. a tackyfier is applied onto the surface of the inner portion of the core element for fixation of the first laminate layer. For example, a spray adhesive is used.

With regard to the above embodiments of the method, we refer to the above described functions and advantages.

Further advantages, features and further developments are set out by the following exemplary embodiments which are explained in conjunction with the figures. The same or similar elements or elements acting in the same way are provided with the same reference numerals in the figures, wherein:
Fig. 1 shows a schematic representation of a wind turbine according to one embodiment example,
Fig. 2 shows a schematic representation of a wind turbine rotor blade,
Fig. 3 shows a schematic representation of a flange insert for the rotor blade,
Fig. 4 shows a cross-sectional view of a laminate structure according to an embodiment of the invention,
Fig. 5a to 5d show different cross-sectional views of the laminate structure according to Fig. 4,
Fig. 6 and 7 show cross-sectional views of a laminate structure according to a further embodiment of the invention,
Fig. 8 shows a cross-sectional view of a laminate structure according to another embodiment of the invention,
Fig. 9 shows a schematic drawing of the first laminate layer, and
Fig. 10 shows a schematic flow chart of a method according to an embodiment of the invention.

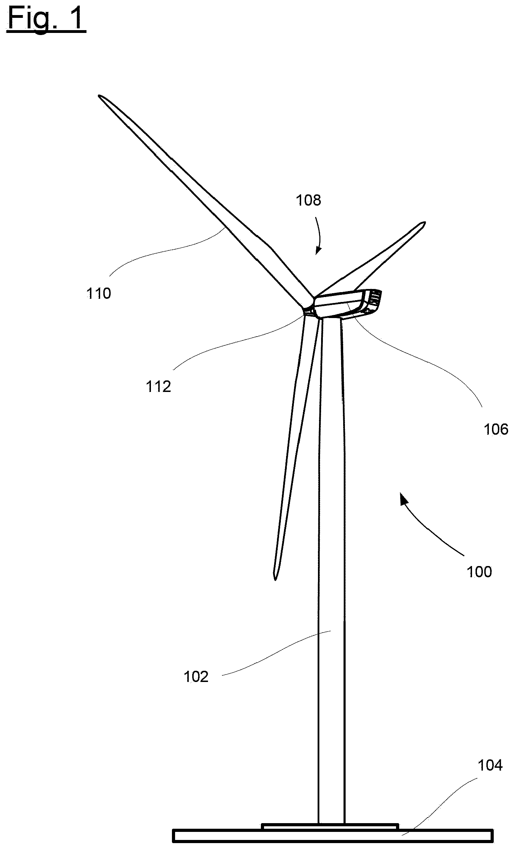

Figure 1 shows a schematic view of a wind turbine 100, which comprises a tower 102. The tower 102 is fixed to the ground by means of a foundation 104. At one end of the tower 102 opposite to the ground a nacelle 106 is rotatably mounted. The nacelle 106, for example, comprises a generator which is coupled to a rotor 108 via a rotor shaft (not shown). The rotor 108 comprises one or more (wind turbine) rotor blades 110, which are arranged on a rotor hub 112.

During operation, the rotor 108 is set in rotation by an air flow, for example wind. This rotational movement is transmitted to the generator via the rotor shaft and, if necessary, a gearbox. The generator converts the kinetic energy of the rotor 108 into electrical energy.

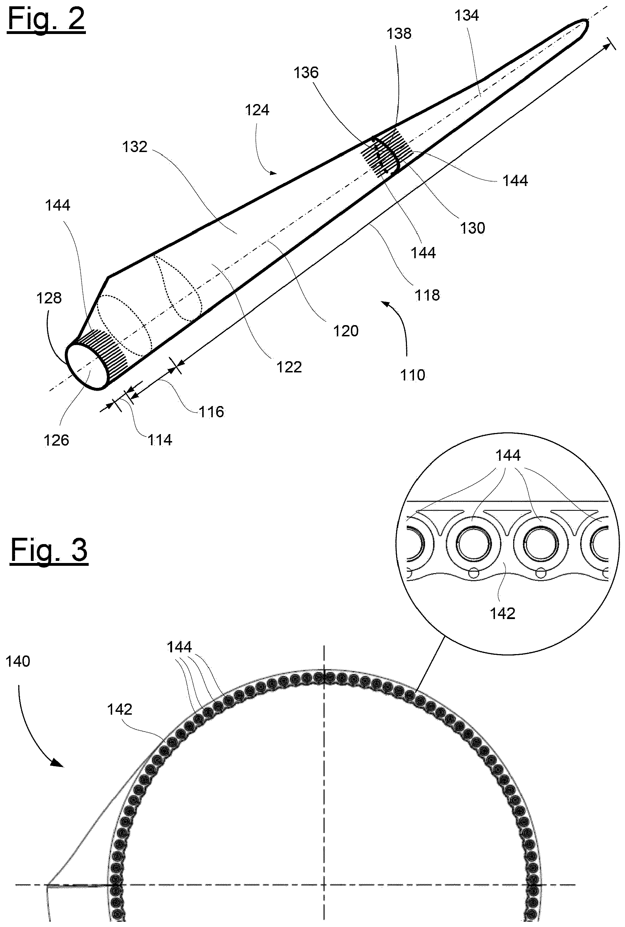

Figure 2 shows an exemplary wind turbine rotor blade 110. The rotor blade 110 has the shape of a conventional rotor blade and has a rotor blade root area 114 facing the rotor hub 112. The rotor blade root area 114 typically has an essentially circular cross-section. The rotor blade root area 114 is followed by a transition area 116 and a profile area 118 of rotor blade 110. The rotor blade 110 has a pressure side 122 and an opposite suction side 124 with respect to a longitudinal extension direction 120 (also main extension direction). The rotor blade 110 is essentially hollow inside.

In the rotor blade root area 114 a rotor blade connection end 126 with a flange connection 128 is provided, by means of which the rotor blade 110 is mechanically connected to a pitch bearing or an extender.

The rotor blade 110 comprises a division area 130 where a blade root-side rotor blade segment 132 and a blade tip-side rotor blade segment 134 are connected to each other. For this purpose, the segments 132, 134 each comprise a segment connection area 136, 138 (also connection ends). The rotor blade 110 is thus a split or segmented rotor blade.

Typically, a flange insert 140 is provided in order to manufacture the flange connection 128 at the rotor blade connection end 126. Said flange insert 140 comprises an arc-shaped laminate 142 (e.g. an inner laminate and an outer laminate), in which a multitude of connecting elements 116 having bushings with threads are embedded, extending in the longitudinal extension direction 120. The bushings are, for example, metal bushings, in particular steel bushings. A semicircular segment is shown in Fig. 3, also showing an enlarged detail cut-out.

In a typical manufacturing process, initially, the flange insert 140 is produced as a half-product or intermediate product, wherein the connecting elements 144 are arranged in a circle at fixed distances adjacent to one another. Distance spacing elements are optionally used to ensure the space between two adjacent connecting elements 144. The laminate 142 as well as the connecting elements 144 are subsequently sealed in an air-tight manner and infused with a matrix material, for instance epoxy resin. In a later step, the flange insert 140 is inserted, for example, into a main mold in order to produce the final rotor blade 110, i.e. the rotor blade (half-)shell and connected to further laminate layers.

However, it is also conceivable that no flange insert 140 is provided and the connecting elements 144 are embedded directly in the laminate layers of the rotor blade 110, for instance in rotor blade half-shells.

Analogously, the two rotor blade segments 132 and 134 are connected by way of such connecting elements 140 with or without flange inserts.

It is noted that the configuration of the rotor blade 110 being comprised of the two rotor blade segments 132 and 134 is optional. It is also possible that the rotor blade 110 is not segmented along the longitudinal direction 120.

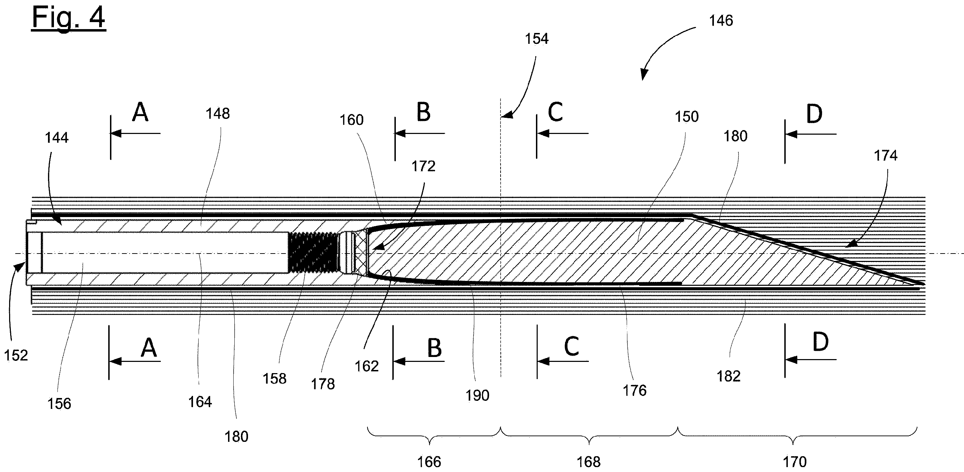

Figure 4 shows a cross-sectional view of a laminate structure 146 with a connecting element 144 according to an embodiment of the invention. For example, the shown laminate structure 146 is a cut-out of the connection end 136 of the first rotor blade segment 132 for connecting the same to the associated connection end 138 of the second rotor blade segment 134. Alternatively, the laminate structure 146 is arranged in the rotor blade root area 114.

The connecting element 144 comprises an essentially cylindrical metal bushing 148 and a separate core element 150. The bushing 148 has a first end 152 and a second end 154 at the opposite side. The first end 152 of the bushing 148 has a bore hole 156 with an inner thread 158 being adapted for accommodating a connection bolt for connecting the connecting element 144 with a corresponding connecting element of the other rotor blade segment. The second end 154 has a bushing-runout 160 with an inner recess 162, the inner recess 162 being of a funnel-like shape. We refer to the introductory description for further details. The core element 150 is made of a polymer foam and - along a longitudinal axis 164 of the bushing 148 (or connecting element 144 respectively) - is comprised of an inner portion 166, a middle portion 168 and an outer portion 170. The core element 150 has an inner end 172 and an opposite outer end 174. The outer portion 170 tapers (is shafted) at the outer end 174 and is adapted to be included into the surrounding laminate, e.g. of a shell of the wind turbine rotor blade 110 or the flange insert 140, as described. The inner portion 166 has a shape that corresponds to the inner recess 162.

A first laminate layer 176 (see inner bold line) is wrapped around the core element 150, in particular entirely around the inner portion 166 and the middle portion 168. The outer portion 170 is free of the first laminate layer 176.

The wrapped core element 150 is inserted into the inner recess 162 with the inner portion 166 such that the first laminate layer 176 is arranged between core element 150 and the bushing runout 160. The middle portion 168 and the outer portion 170 of the core element 150 extend out of the bushing runout 160. The core element 150 is inserted into the bushing runout 160, until its inner end 172 abuts, e.g. against a bolt stopper element 178. The core element 150 is inserted about 10 cm or more into the inner recess 162.

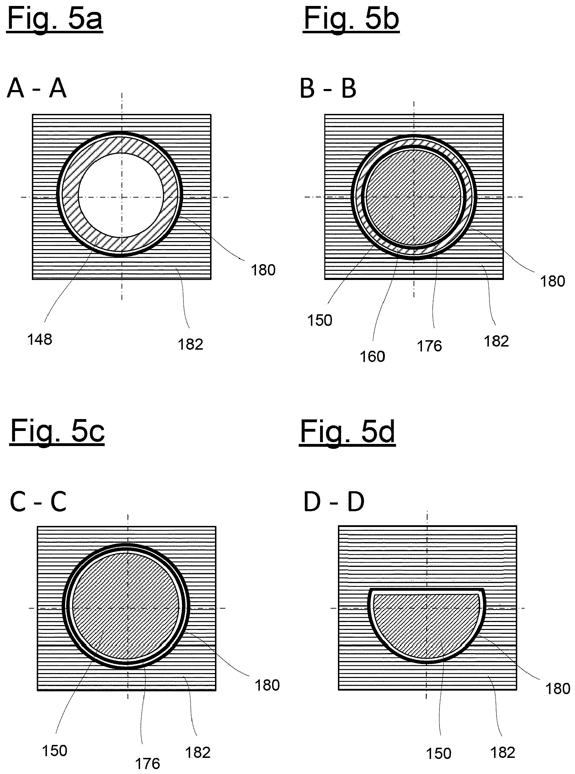

Further, a second laminate layer 180 is wrapped around both the entire bushing 148 and entire core element 150 (see bold line). The second laminate layer 180 is thus wrapped on top of the first laminate layer 176 in the middle portion 168 of the core element 150 (see also figure 5c).

Finally, the connecting element 144 and its first and second laminate layers 176 and 180 are embedded into third laminate layers 182, e.g. the final laminate as described above.

All laminate layers 176, 180 and 182 comprise one or more fiber layers (fiber mats), which are resin-infused after wrapping during a resin infusion step in a later manufacturing process. It is noted that the surface of the inner recess 162 of the bushing runout 160 is roughened for better adherence of the resin. Further, adhesive 190, e.g. by spraying, may be applied at least onto the surface of the inner portion 166 (optionally also onto the middle portion 168) prior to the first laminate layer 176 being wrapped onto the core element 150.

Figures 5a to 5d show different cross-sectional views of the connecting element 144 of figure 4 along the longitudinal axis 164. From these cross-sectional views, the arrangement of the connecting element and the several laminate layers 176, 180 and 182 is visible, in particular with regard to a radial direction along the longitudinal axis 164.

The above-described laminate structure 146 and its connecting element 144 enable the mentioned functions and advantages as mentioned in the introductory part.

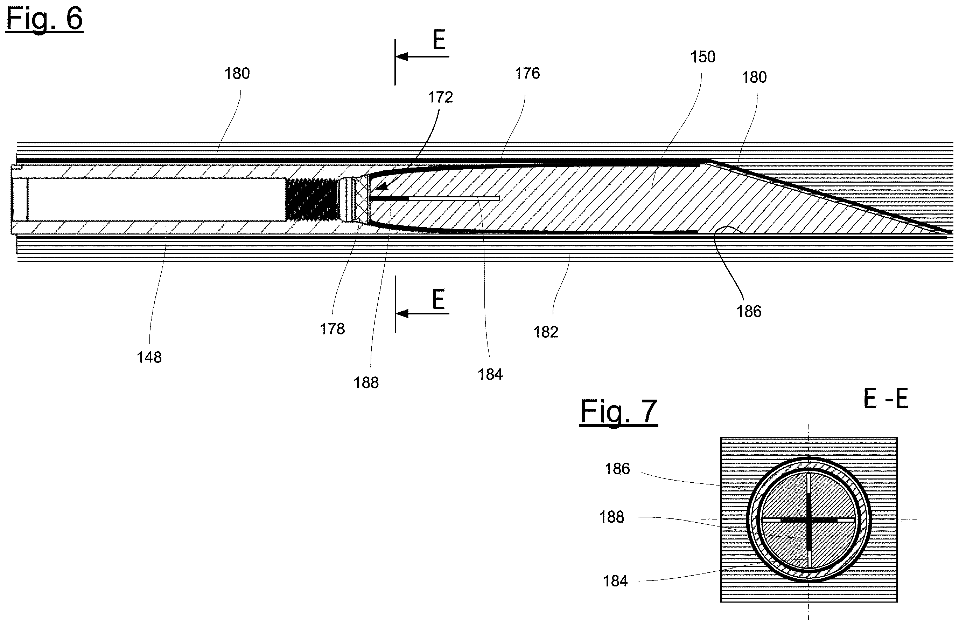

Figures 6 and 7 refer to another embodiment of the invention. The shown laminate structure 146 is the same as the above described one, thus the same reference signs are used and no further description is needed. However, the core element 150 additionally comprises a resin channel 184 in the inner portion 166, which extends from an outer surface 186 of the core element 150 towards the inner end 172. At the inner end 172, a flexible spacer element 188 is inserted into the resin channel 184. As can be seen from figure 7 showing the cross-section view E-E of figure 6, the resin channel 184 as well as the spacer element 188 is formed in a cross-like manner.

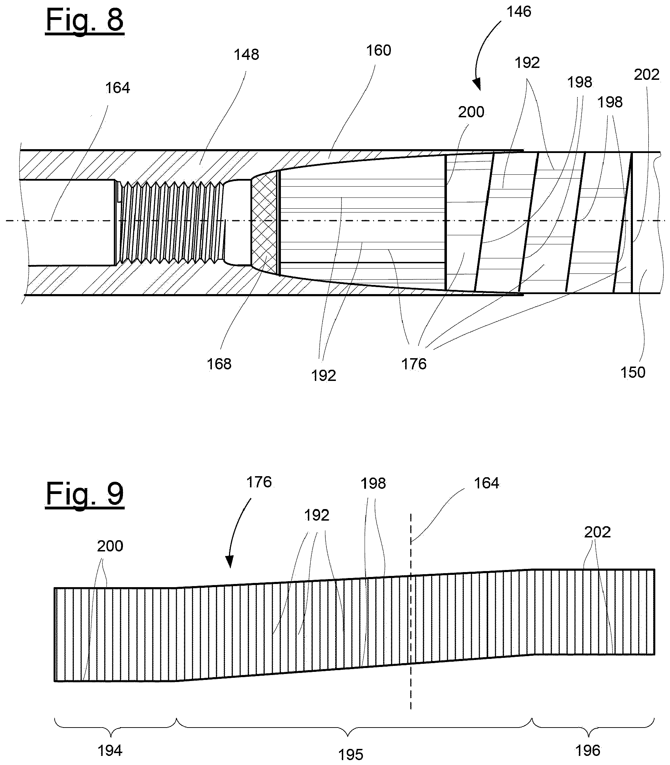

Figure 8 shows a cross-sectional view of the laminate structure 146 according to a further embodiment of the invention. The above described features and reference signs analogously apply unless otherwise stated in the following. The core element 150 is wrapped into the first laminate layer 176 and inserted into the bushing runout 160 of the bushing 148. The first laminate layer 176 has a predefined shape (see for example Fig. 9) that causes an edge (or an edge portion) of the layer 176 to be offset along the turns when the core element is wrapped. The first laminate layer 176 is wrapped around the core material such, that the uni-directional fibers 192 (schematically shown in the figures 8 and 9) essentially run along the longitudinal axis 164 of the core element 150 or the bushing 148 respectively.

Figure 9 shows the shape the first laminate layer 176. The dimensions can vary according to the shape of the core element 150. The first laminate layer 176 (reference is made here to one ply, although multiple plies may be provided) has a particular cut when unrolled or spread out that does not correspond to a pure rectangle. Rather, when viewed from left to right in the figure, the shown first laminate layer 176 is formed of a rectangular section 194, a parallelogram-like section 195 (which optionally tapers from left to right), and again a rectangular section 196. The special shape of the trim of the first laminate (dry layer) ensures that the unidirectional fibers 192 remain in longitudinal order. Nevertheless, the shape of the first laminate layer 176 ensures an oblique wrapping, where the edges 198 of each turn of the parallelogram-like section are oblique to the longitudinal axis 164 with an offset resp. distance of at least 20 mm to each other. The edges 200 and 202 of the rectangular sections 194 and 196 are perpendicular to the longitudinal axis 164 (see also Fig. 8). Furthermore, the particular shape ensures a wrinkle-free wrapping of the core element 150.

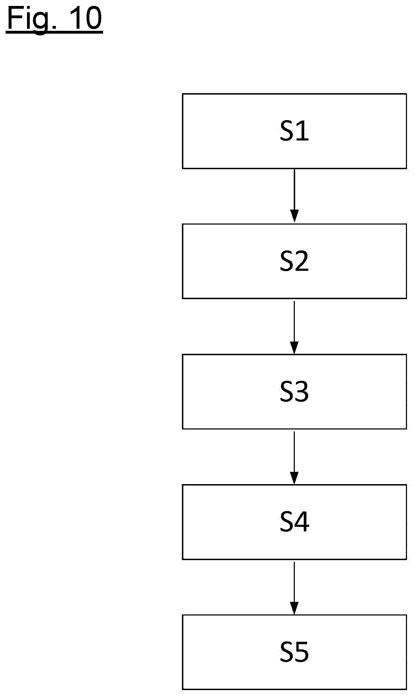

Figure 10 shows a schematic flow chart of a method according to an embodiment of the invention. The method describes steps for manufacturing the laminate structure 146 as described above for a flange connection of a wind turbine rotor blade 110.

In a first step S1, the bushing 148 is provided.

In a second step S2, the core element 150 is provided.

In a third step S3, the first laminate layer 176 is wrapped around the inner portion 166 and at least a part of the middle portion 168 of the core element 150.

In a fourth step S4, the core element 150 is inserted into the inner recess 162 with the inner portion 166 such that the first laminate layer 176 is arranged between the core element 150 and the bushing runout 160 as described above.

In a fifth step S5, the first laminate layer 176 is infused with resin and the resin cures.

The method provides the described advantages and functions.

Further steps can be proceeded as described in the introductory part or the sub-claims.

### Reference signs

- 100: wind turbine
- 102: tower
- 104: foundation
- 106: nacelle
- 108: rotor
- 110: rotor blade
- 112: rotor hub
- 114: rotor blade root area
- 116: transition area
- 118: profile area
- 120: longitudinal direction
- 122: pressure side
- 124: suction side
- 126: rotor blade connection end
- 128: flange connection
- 130: division area
- 132: first rotor blade segment
- 134: second rotor blade segment
- 136: first connection end
- 138: second connection end
- 140: flange insert
- 142: laminate
- 144: connecting element
- 146: laminate structure
- 148: bushing
- 150: core element
- 152: first end
- 154: second end
- 156: bore hole
- 158: inner thread
- 160: bushing runout
- 162: inner recess
- 164: longitudinal axis
- 166: inner portion
- 168: middle portion
- 170: outer portion
- 172: inner end
- 174: outer end
- 176: first laminate layer
- 178: bolt stopper element
- 180: second laminate layer
- 182: third laminate layer
- 184: resin channel
- 186: outer surface
- 188: spacer element
- 190: adhesive
- 192: uni-directional fibers
- 194: rectangular section
- 195: parallelogram-like section
- 196: rectangular section
- 198: edge
- 200: edge
- 202: edge
- S1 to S5: step

## Claims

1. A laminate structure (146) for a flange connection of a wind turbine rotor blade (110) with at least one connecting element (144) comprising a bushing (148) and a core element (150), wherein
- a first end (152) of the bushing (148) has a bore hole (156) with an inner thread (158) being adapted for accommodating a connection bolt,
- a second end (154) of the bushing (148) has a bushing runout (160) with an inner recess (162), the inner recess (162) being of a funnel-like shape,
- the core element (150) comprises an inner portion (166), a middle portion (168) and an outer portion (170), wherein
-- the outer portion (170) tapers at an end (174) opposite to the inner portion (166),
-- the inner portion (166) has a shape corresponding to the inner recess (162),
- a first laminate layer (176) is wrapped around the inner portion (166) and the middle portion (168) of the core element (150), and
- the wrapped core element (150) is inserted into the inner recess (162) with the inner portion (166) such that the first laminate layer (176) is arranged between the core element (150) and the bushing runout (160).

2. Laminate structure (146) according to claim 1, wherein the outer portion (170) is free of the first laminate layer (176) .

3. Laminate structure (146) according to claim 1 or 2, comprising a second laminate layer (180) being wrapped around both the bushing (148) and the core element (150).

4. Laminate structure (146) according to claim 3, wherein the second laminate layer (180) covers the bushing (148) and the middle portion (168) of the core element (150).

5. Laminate structure (146) according to claim 4, wherein the second laminate layer (180) is wrapped on top of the first laminate layer (176) in the middle portion (168) of the core element (150).

6. Laminate structure (146) according to any one of the preceding claims, wherein the first laminate layer (178) and/or the second laminate layer (180) are made from a dry fiber material and infused with resin.

7. Laminate structure (146) according to any one of the preceding claims, wherein the inner portion (166) of the core element (150) comprises a resin channel (184), the resin channel (1894) extending from an outer surface (186) of the core element (150) towards an end of the inner portion (166) facing the first end (152) of the bushing (148).

8. Laminate structure (146) according to claim 7, wherein the resin channel (184) is formed in a cross-like manner within the core element (150).

9. Laminate structure (146) according to claim 7 or 8, wherein a spacer element (188) is at least partially arranged in the resin channel (184).

10. Laminate structure (146) according to any one of the preceding claims, wherein the bushing runout (160) is at least partially roughened within the inner recess (162).

11. Laminate structure (146) according to any one of the preceding claims, wherein the inner portion (166) of the core element (150) is inserted about 10 cm or more into the inner recess (162).

12. Connecting element (144) for a flange connection of a wind turbine rotor blade (110), comprising a bushing (148) and a core element (150), wherein
- a first end (152) of the bushing (148) has a bore hole (156) with an inner thread (158) being adapted for accommodating a connection bolt,
- a second end (154) of the bushing (148) has a bushing runout (160) with an inner recess (162), the inner recess (162) being of a funnel-like shape,
- the core element (150) comprises an inner portion (166), a middle portion (168) and an outer portion (170), wherein
-- the outer portion (170) tapers at an end opposite to the inner portion (166),
-- the inner portion (166) has a shape corresponding to the inner recess (162),
- a first laminate layer (176) is wrapped around the inner portion (166) and the middle portion (168) of the core element (150), and
- the wrapped core element (150) is inserted into the inner recess (162) with the inner portion (166) such that the first laminate layer (176) is arranged between the core element (150) and the bushing runout (160).

13. A wind turbine rotor blade comprising a flange connection having a laminate structure (146) according to any one of the claims 1 to 11.

14. Method for manufacturing a laminate structure (146) for a flange connection of a wind turbine rotor blade (110), the method comprising the steps of:
- providing a bushing (148), the bushing (148) comprising - at a first bushing end (152) - a bore hole (156) with an inner thread (158) adapted for accommodating a connection bolt, and - at a second bushing end (154) - a bushing runout (160) with an inner recess (162), the inner recess (162) being of a funnel-like shape,
- providing a core element (150), which comprises an inner portion (166), a middle portion (168) and an outer portion (170), wherein
-- the inner portion (166) has a shape corresponding to the shape of the inner recess (162), and
-- the outer portion (170) tapers at an end opposite to the inner portion (166),
- wrapping a first laminate layer (176) around the inner portion (166) and at least a part of the middle portion (168) of the core element (150),
- inserting the core element (150) into the inner recess (162) with the inner portion (166) such that the first laminate layer (176) is arranged between the core element (150) and the bushing runout (160), and
- infusing the first laminate layer (176) with resin and curing the resin.

15. Method according to claim 14, comprising the additional step of
- wrapping a second laminate layer (180) around both the bushing (148) and the core element (150) and wherein, in the step of infusing, both the first and second laminate layers (176, 180) are infused with the resin and cured afterwards.

16. Method according to claims 14 or 15, comprising the additional step of embedding the connecting element (144) between one or more further laminates.

17. Method according to any one of claims 14 to 16, wherein - prior to the step of wrapping the first laminate layer - adhesive (190) is applied onto the surface of the inner portion of the core element (150) for fixation of the first laminate layer.
